Europäisches Patentamt

**European Patent Office**

**Office européen des brevets**

(19)

(11) Numéro de publication: **0 114 545**
**B1**

(12) **FASCICULE DE BREVET EUROPEEN**

(45) Date de publication du fascicule du brevet:
**11.03.87**

(51) Int. Cl.⁴: **G 21 C 13/04**

(21) Numéro de dépôt: **83402392.1**

(22) Date de dépôt: **12.12.83**

(54) Circuit de refroidissement d'un réacteur nucléaire refroidi par un métal liquide.

(30) Priorité: **17.12.82 FR 8221207**

(43) Date de publication de la demande:
**01.08.84 Bulletin 84/31**

(45) Mention de la délivrance du brevet:
**11.03.87 Bulletin 87/11**

(84) Etats contractants désignés:
**BE DE GB IT**

(56) Documents cités:
**EP - A - 0 006 801**
**DE - A - 1 564 054**
**DE - A - 1 815 046**
**FR - A - 2 083 482**
**US - A - 3 185 631**

(73) Titulaire: **COMMISSARIAT A L'ENERGIE ATOMIQUE**
**Etablissement de Caractère Scientifique Technique et**
**Industriel, 31/33, rue de la Fédération, F-75015 Paris**
**(FR)**

(72) Inventeur: **Sauvage, Michel, Parc Laurana - Bât A**
**Traverse Malakoff, F-13100 Aix En Provence (FR)**

(74) Mandataire: **Mongrédien, André et ai, c/o**
**BREVATOME 25, rue de Ponthieu, F-75008 Paris (FR)**

## Description

La présente invention se rapporte de façon générale à un circuit de refroidissement d'un réacteur nucléaire à neutrons rapides refroidi par un métal liquide.

De façon plus précise, l'invention s'applique aux circuits secondaires des réacteurs à neutrons rapides, ainsi qu'aux circuits primaires de ces réacteurs, lorsque ces circuits primaires sont constitués par des boucles externes à la cuve du réacteur.

Dans l'état actuel de la technique, tous les composants (pompes, échangeurs, générateurs de vapeur, etc. ...) des circuits des réacteurs à neutrons rapides sont reçus de façon fixe sur des supports et les dilatations qui interviennent dans les tuyauteries reliant ces composants sont compensées par des lyres de dilatation formées dans ces tuyauteries. Toutefois, la présence de ces lyres de dilatation accroît de façon très sensible la longueur des tuyauteries constituant les circuits de métal liquide du réacteur. Cette caractéristique n'est pas satisfaisante car elle accroît sensiblement le coût des circuits de métal liquide, qui est un des éléments importants du coût de la chaudière.

Afin de rendre plus compacts les circuits des réacteurs à neutrons rapides, on peut s'inspirer des techniques utilisées dans les réacteurs à eau sous pression. Dans ces réacteurs, les composants sont supportés de façon mobile, la dilatation des tuyauteries qui les relie à la cuve fixe assurant leur déplacement. Compte tenu de la pression qui règne à l'intérieur des circuits des réacteurs à eau sous pression, les tuyauteries présentent par construction une épaisseur importante, de telle sorte qu'elles supportent très facilement les efforts nécessaires au déplacement des composants.

Toutefois, cette technique n'est pas directement applicable aux circuits des réacteurs à neutrons rapides, car ces circuits se composent de tuyauteries à parois minces qui ne pourraient pas supporter les efforts importants qu'elles auraient alors à exercer sur les composants mobiles. De plus, il n'est pas concevable d'augmenter l'épaisseur de ces tuyauteries, en raison des sollicitations thermiques auxquelles elles sont soumises et des problèmes de fatigue qui en résultent.

La présente invention a précisément pour objet un circuit de refroidissement d'un réacteur nucléaire à neutrons rapides dont les tuyauteries sont sensiblement plus courtes que les tuyauteries des circuits existants et qui ne présentent pas les inconvénients des solutions connues par ailleurs, lorsque celles-ci sont transférées directement à de tels circuits.

A cet effet et conformément à l'invention, il est proposé un circuit de refroidissement d'un réacteur nucléaire refroidi par un métal liquide comprenant au moins deux composants reliés entre eux par des tuyauteries, au moins l'un des composants étant fixe, caractérisé en ce qu'au moins un autre composant est supporté de façon mobile dans un plan horizontal, chaque composant mobile étant relié directement à un composant fixe par un tuyauterie à paroi mince véhiculant le métal liquide, cette tuyauterie étant pourvue d'un compensateur de dilatation, et par une enveloppe externe rigide et étanche disposée autour de la tuyauterie correspondante, ladite enveloppe étant liée de façon rigide et étanche d'une part au composant fixe et, d'autre part, au composant mobile correspondant.

Grâce à ces caractéristiques, la tuyauterie interne à paroi mince sert uniquement à véhiculer le métal liquide et elle n'est soumise à aucun effort autre que ceux imposés par le compensateur. Au contraire, l'enveloppe externe de plus forte épaisseur transmet au composant mobile les efforts nécessaires à leur déplacement mais n'est soumise qu'à des sollicitations thermiques très atténuées. Elle sert en outre d'enveloppe de sécurité en cas de fuite de la tuyauterie à paroi mince, notamment au niveau du compensateur de dilatation. De ce fait, les fonctions de la tuyauterie et de l'enveloppe sont totalement dissociées, ce qui permet la réalisation de circuits compacts parfaitement fiables, où le composant fixe et le composant mobile sont implantés au plus près l'un de l'autre.

De préférence, les composants mobiles sont reliés directement entre eux par des tuyauteries souples permettant de reprendre les efforts de déplacement imposés par les composants.

Afin d'éviter une fatigue thermique pouvant résulter d'une transmission trop rapide à l'enveloppe externe d'une variation brusque de la température du métal liquide véhiculé par la tuyauterie, l'espace annulaire formé entre l'enveloppe étanche et la tuyauterie est, de préférence, rempli de gaz neutre.

Pour la même raison, un calorifuge peut être disposé autour de la tuyauterie, à l'intérieur de l'enveloppe étanche correspondante.

Lorsque l'invention est appliquée à un circuit de refroidissement primaire comprenant une cuve contenant le cœur du réacteur, au moins un échangeur de chaleur externe à ladite cuve et au moins une pompe de circulation externe à ladite cuve, la cuve est de préférence fixe, l'échangeur de chaleur et la pompe étant supportés de façon mobile.

De façon comparable, dans l'application de l'invention à un circuit de refroidissement secondaire comprenant au moins un échangeur de chaleur, au moins un générateur de vapeur et au moins une pompe de circulation, l'échangeur de chaleur est de préférence fixe, alors que le générateur de vapeur et la pompe sont supportés de façon mobile.

On décrira maintenant, à titre d'exemples non limitatifs, différentes applications de l'invention en se référant aux dessins annexés dans lesquels:

   – la figure 1 est une vue en coupe schématique montrant le circuit primaire et une boucle du circuit secondaire d'un réacteur nucléaire à neutrons rapides de type intégré, dans lequel la boucle secondaire est réalisée conformément à l'invention,

– la figure 2 est une vue en coupe à plus grande échelle montrant la réalisation des liaisons entre les différents composants du circuit secondaire de la figure 1, et

– les figures 3a, 3b et 3c illustrent de façon très schématique l'application de l'invention à une boucle d'un circuit secondaire comprenant un seul échangeur de chaleur, l'application de l'invention à une boucle d'un circuit secondaire comprenant deux échangeurs de chaleur, et l'application de l'invention à une boucle du circuit primaire d'un réacteur du type à boucles, respectivement.

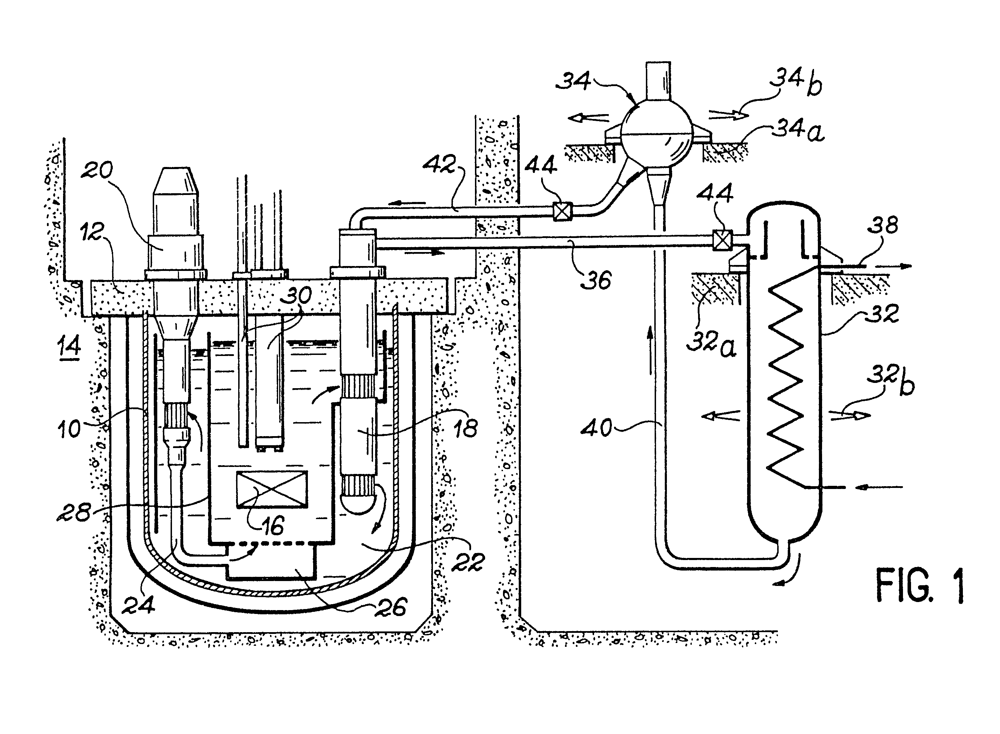

Sur la figure 1, on a représenté le circuit primaire intégré et une boucle du circuit secondaire d'un réacteur nucléaire à neutrons rapides de type connu, dans lequel la boucle secondaire a été modifiée conformément à l'invention.

Dans ce réacteur de type intégré, l'ensemble du circuit primaire est disposé de façon connue à l'intérieur d'une cuve 10, dite cuve principale, suspendue à une dalle de béton 12 reposant par sa périphérie sur une enceinte de béton 14. A l'intérieur de la cuve 10 sont disposés le cœur 16 du réacteur, les échangeurs de chaleur 18 et les pompes de circulation 20 du circuit primaire.

La cuve 10 est remplie d'un métal liquide 22 tel que du sodium, qui circule sous l'action des pompes 20 dans le cœur 16 et dans les échangeurs 18. De façon plus précise, le sodium liquide chaud sortant du cœur 16 à la partie supérieure de celui-ci pénètre dans les échangeurs 18 pour transmettre une partie de la chaleur qu'il véhicule au métal liquide tel que du sodium circulant dans les boucles du circuit secondaire. Le sodium primaire relativement froid sortant à la partie inférieure des échangeurs 18 est repris par les pompes 20 et réinjecté par des canalisations 24 dans le sommier d'alimentation 26 du cœur du réacteur. La séparation entre le sodium chaud sortant du cœur du réacteur et le sodium relativement froid rejeté par les échangeurs 18 est réalisée au moyen d'une cuve interne 28.

Les échangeurs 18 et les pompes 20 sont suspendus à la dalle 12 qui supporte également, par l'intermédiaire d'un système de double bouchon tournant (non représenté) l'instrumentation 30 servant à effectuer les manipulations et les mesures nécessaires au niveau du cœur 16.

Dans le mode de réalisation représenté sur la figure 1, chaque boucle du circuit secondaire comprend l'un des échangeurs 18, un générateur de vapeur 32 et une pompe de circulation 34. La tête de l'échangeur 18 située au-dessus de la dalle 12 communique avec l'extrémité supérieure du générateur de vapeur 32 par une canalisation 36, par laquelle le sodium secondaire réchauffé sortant de l'échangeur 18 est acheminé dans le générateur de vapeur. Après avoir transmis une partie de la chaleur qu'il véhicule à l'eau d'un circuit eau/vapeur, dont une partie est représentée schématiquement en 38 sur la figure 1, le sodium secondaire refroidi sort du générateur de vapeur 32 à l'extrémité inférieure de celui-ci pour être aspiré par la pompe 34 au travers d'une canalisation 40. La pompe 34 est généralement disposée approximativement au niveau de l'extrémité supérieure du générateur de vapeur 32. Le sodium secondaire aspiré par la pompe 34 est refoulé vers la tête de l'échangeur 18 par une troisième canalisation 42.

Conformément à l'invention et afin de diminuer la longueur des canalisations de liaison 36 et 42, les lyres de dilatation qui sont généralement prévues dans ces canalisations selon la technique antérieure sont supprimées. De ce fait et comme on le verra ultérieurement, il existe une liaison rigide entre le composant fixe, en l'occurrence l'échangeur 18 et chacun des composants mobiles que constituent le générateur de vapeur 32 et la pompe 34.

A cet effet, on voit de façon schématique sur la figure 1 que le générateur 32 comme la pompe 34 reposent sur des planchers de supportage désignés respectivement par les références 32a et 34a, de façon à pouvoir se déplacer dans un plan horizontal par rapport au plancher correspondant, comme l'indiquent schématiquement les flèches 32b et 34b.

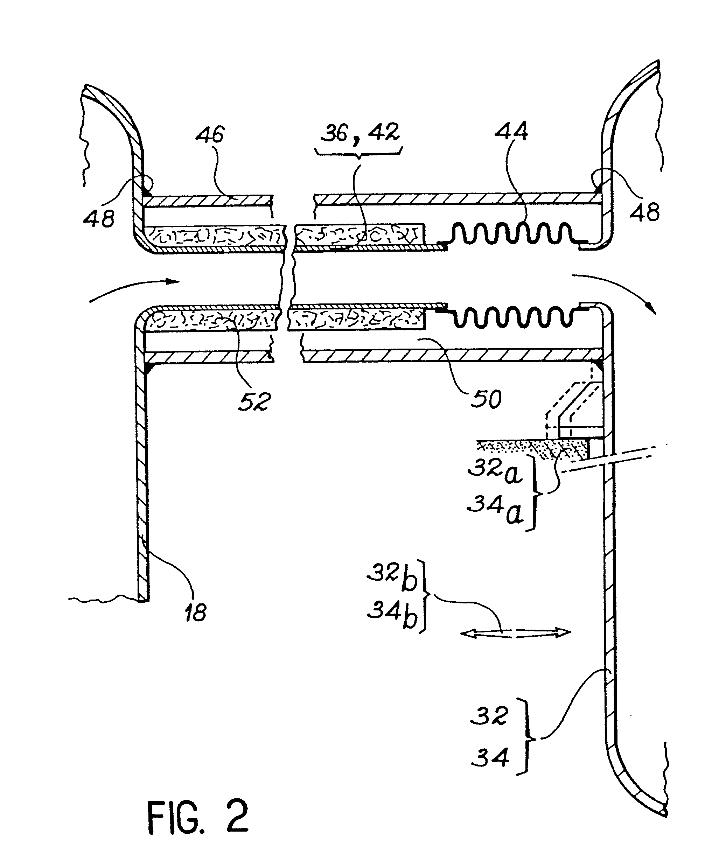

De plus et comme l'illustre la figure 2, il est nécessaire de disposer d'un moyen de liaison rigide entre l'échangeur fixe 18 et chacun des composants mobiles 32 et 34, afin d'exercer sur ces derniers composants les efforts nécessaires à leur déplacement, à la fois pour tenir compte des variations de températures du sodium et pour assurer la tenue des circuits en cas de séisme. Comme on l'a déjà mentionné précédemment, les tuyauteries assurant la circulation du sodium dans les réacteurs à neutrons rapides sont à paroi mince et leur épaisseur ne peut pas être accrue, compte tenu des sollicitations thermiques auxquelles elles sont soumises. En conséquence, cette fonction de liaison rigide ne peut pas être remplie par les canalisations 36 et 42.

Il est donc nécessaire de disposer, en plus des tuyauteries servant à véhiculer le sodium liquide, des structures de liaison rigides reliant les composants. Compte tenu du caractère rigide de ces structures de liaison et des sollicitations thermiques différentes auxquelles sont soumises les tuyauteries et les structures de liaison, il est donc nécessaire de prévoir un compensateur de dilatation tel qu'un soufflet 44 sur chacune des tuyauteries 36 et 42.

Comme on l'a mentionné précédemment, la présence de soufflets de dilatation 44 dans les tuyauteries impose pratiquement de doubler celles-ci d'une enveloppe externe 46.

Conformément à l'invention, et en combinaison avec le caractère mobile des composants 32 et 34 et avec la présence du compensateur de dilatation 44 sur les tuyauteries 36 et 42, l'enveloppe externe étanche 46 qui est disposée coaxialement autour de chacune des tuyauteries 36 et 42 remplit également la fonction de structure rigide entre l'échangeur fixe 18 et les composants mobiles 32 et 34. A cet effet, l'enveloppe 46 est relativement épaisse et elle est fixée à l'enveloppe de la tête de l'échangeur 18 et à l'enveloppe du générateur de vapeur 32 ou de la pompe 34, respectivement, de façon rigide par exemple par des soudures 48. A titre d'exemple, l'épaisseur de l'enveloppe 46 peut être environ double de celle de la tuyauterie interne 36 ou 42. Ainsi, si l'épaisseur de la tuyauterie interne est d'environ 10 mm, l'épaisseur de l'enveloppe sera d'environ 20 mm.

L'enveloppe 46 sert donc d'enveloppe de sécurité en cas de défaillance du soufflet d'étanchéité 44 et elle permet de transmettre aux composants mobiles 32 et 34 les efforts nécessaires à leur déplacement par rapport à l'échangeur fixe 18, pour tenir compte des variations de température ou en cas de séisme. De préférence, les planchers de supportage 32a et 34a sont disposés le plus près possible de l'enveloppe 46 servant à transmettre les efforts.

Comme l'illustre la figure 2, l'enveloppe 46 est disposée coaxialement autour de la tuyauterie 36 ou 42 respectivement et elle définit avec celle-ci un espace annulaire 50 dans lequel est reçu de préférence un gaz neutre. Cette caractéristique est intéressante pour des raisons de sûreté, en cas de défaillance du soufflet d'étanchéité 44, mais aussi afin d'assurer une certaine isolation thermique entre la tuyauterie et son enveloppe. Grâce à cette isolation, des variations brusques de la température du sodium circulant à l'intérieur de la tuyauterie conduisent à des variations très lentes de la température au niveau de l'enveloppe 46, de telle sorte que celle-ci ne subit pas de fatigue thermique et que sa fiabilité s'en trouve accrue.

Afin d'améliorer encore l'isolation thermique entre le sodium liquide circulant dans les tuyauteries 36 ou 42 et l'enveloppe 46 qui les entoure, on peut prévoir de disposer entre ces deux pièces un calorifuge 52 pouvant notamment recouvrir la tuyauterie 36 ou 42 comme l'illustre la figure 2.

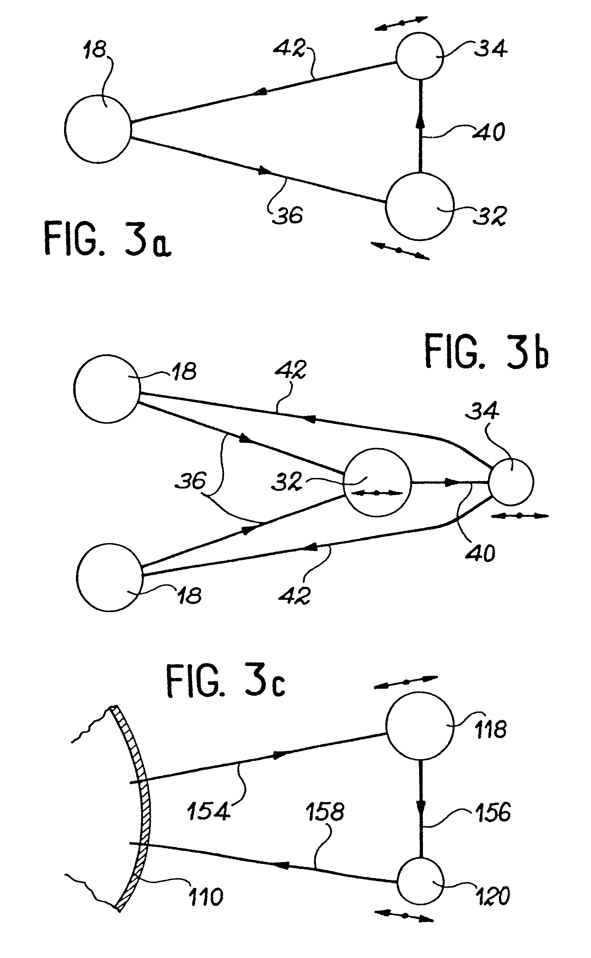

On retrouve sur la figure 3a l'illustration schématique de la boucle secondaire qui vient d'être décrite en se référant aux figures 1 et 2. Les tuyauteries 36 et 42 sont constituées conformément à l'invention, tandis que la tuyauterie de liaison 40 est une tuyauterie classique souple. Comme l'illustrent les figures 3b et 3c, l'invention n'est pas limitée à un circuit de ce type et peut s'appliquer à tout autre circuit véhiculant un métal liquide dans un réacteur nucléaire à neutrons rapides, que ce circuit soit actif ou passif.

Ainsi, on a représenté sur la figure 3b un autre type de boucle secondaire dans lequel deux échangeurs 18 sont disposés dans une même boucle comprenant par ailleurs un seul générateur de vapeur 32 et une seule pompe de circulation 34. Dans ce cas, on voit qu'il existe deux tuyauteries 36 reliant chacun des échangeurs 18 au générateur 32 et deux tuyauteries 42 reliant la pompe 34 à chacun des échangeurs. Dans ce cas, les deux échangeurs 18 qui sont disposés directement dans la cuve du réacteur sont fixes alors que le générateur de vapeur 32 et la pompe 34 sont mobiles comme dans le mode de réalisation précédent.

Comme l'illustre la figure 3c, l'invention s'applique également à une boucle primaire d'un réacteur nucléaire à neutrons rapides du type à boucle. Dans ce cas, l'échangeur 118 ainsi que la pompe 120 du circuit primaire sont disposés à l'extérieur de la cuve 110 contenant le cœur du réacteur. Il existe alors une tuyauterie 154 qui relie la cuve 110 à l'échangeur 118, une tuyauterie 156 qui relie ce dernier à la pompe 120 et une tuyauterie 158 par laquelle le sodium primaire est refoulé dans la cuve 110 afin de passer à nouveau dans le cœur du réacteur. Dans ce cas, la cuve 110 constitue un composant fixe et l'échangeur 118 ainsi que la pompe 120 sont supportés de façon mobile comme le générateur de vapeur 32 et la pompe 34 dans le cas de la figure 1. Les tuyauteries 154 et 158 présentent alors les mêmes caractéristiques que les tuyauteries 36 et 42 dans le mode de réalisation de la figure 1.

En ce qui concerne les tuyauteries telles que 40 et 156 qui relient entre eux deux composants mobiles du circuit, elles sont réalisées de façon classique et comprennent une partie souple telle qu'une lyre de dilatation.

**Revendications**

1. Circuit de refroidissement d'un réacteur nucléaire refroidi par un métal liquide, comprenant au moins deux composants (18, 32, 34; 110, 118, 120) reliés entre eux par des tuyauteries (36, 40, 42; 154, 156, 158), au moins l'un (18; 110) des composants étant fixe, caractérisé en ce qu'au moins un autre composant (32, 34; 118, 120) est supporté de façon mobile dans un plan horizontal, chaque composant mobile étant relié directement à un composant fixe par une tuyauterie à paroi mince (36, 42) véhiculant le métal liquide, cette tuyauterie étant pourvue d'un compensateur de dilatation (44), et par une enveloppe externe (46) rigide et étanche disposée autour de la tuyauterie correspondante, ladite enveloppe étant liée de façon rigide et étanche d'une part au composant fixe (18) et, d'autre part, au composant mobile correspondant (32, 34).

2. Circuit selon la revendication 1, caractérisé en ce que l'enveloppe étanche (46) définit autour de la tuyauterie (36, 42) correspondante un espace annulaire (50) rempli de gaz neutre.

3. Circuit selon la revendication 2, caractérisé en ce qu'un calorifuge (52) est disposé autour de la tuyauterie (36, 42), à l'intérieur de l'enveloppe étanche (46) correspondante.

4. Circuit selon l'une quelconque des revendications 1 à 3, caractérisé en ce qu'au moins deux des composants sont supportés de façon mobile, ces composants mobiles (32, 34; 118, 120) étant reliés directement entre eux par une tuyauterie souple (40, 156) véhiculant le métal liquide.

5. Circuit de refroidissement primaire selon l'une quelconque des revendications 1 à 4, comprenant une cuve (110) contenant le cœur du réacteur, au moins un échangeur de chaleur (118) externe à ladite cuve et au moins une pompe de circulation (120) externe à ladite cuve, caractérisé en ce que la cuve est fixe et en ce que l'échangeur de chaleur et la pompe sont supportés de façon mobile.

6. Circuit de refroidissement secondaire selon l'une quelconque des revendications 1 à 4, comprenant au moins un échangeur de chaleur (18), au moins un générateur de vapeur (32) et au moins une pompe de circulation (34), caractérisé en ce que l'échangeur de chaleur est fixe et en ce que le générateur de vapeur et la pompe sont supportés de façon mobile.

## Patentansprüche

1. Kühlkreislauf für einen mit flüssigem Metall gekühlten Kernreaktor mit wenigstens zwei Teilen (18, 32, 34; 110, 118, 120), die miteinander durch Rohrleitungen (36, 40, 42; 154, 156, 158) verbunden sind, wobei wenigstens eines (18; 110) der Teile fest ist, dadurch gekennzeichnet, dass wenigstens ein anderes Teil (32, 34; 118, 120) in einer horizontalen Ebene beweglich gehalten ist, jedes bewegliche Teil unmittelbar mit einem festen Teil durch eine das flüssige Metall führende, dünnwandige Rohrleitung (36, 42), die mit einer Ausdehnungsrohrverbindung (44) versehen ist, und durch einen äusseren, steifen und dichten, um die entsprechende Rohrleitung herum angeordneten Mantel (46) verbunden ist, der steif und dicht einerseits mit dem festen Teil (18) und andererseits mit dem entsprechenden beweglichen Teil (32, 34) verbunden ist.

2. Kreislauf nach Anspruch 1, dadurch gekennzeichnet, dass der dichte Mantel (46) um die entsprechende Rohrleitung (36, 42) herum einen mit einem neutralen Gas gefüllten Ringraum (50) begrenzt.

3. Kreislauf nach Anspruch 2, dadurch gekennzeichnet, dass eine Wärmedämmung (52) im Inneren des entsprechenden, dichten Mantels (46) um die Rohrleitung (36, 42) herum angeordnet ist.

4. Kreislauf nach einem der Ansprüche 1 bis 3, dadurch gekennzeichnet, dass wenigstens zwei Teile beweglich gehalten sind, wobei diese beweglichen Teile (32, 34; 118, 120) unmittelbar miteinander durch eine nachgiebige, das flüssige Metall führende Rohrleitung (40, 156) verbunden sind.

5. Primärkühlkreislauf nach einem der Ansprüche 1 bis 4, mit einem den Reaktorkern enthaltenden Behälter (110), wenigstens einem Wärmetauscher (118) ausserhalb des Behälters und wenigstens einer Umwälzpumpe (120) ausserhalb des Behälters, dadurch gekennzeichnet, dass der Behälter fest ist und dass der Wärmetauscher und die Pumpe beweglich gehalten sind.

6. Sekundärkühlkreislauf nach einem der Ansprüche 1 bis 4, mit wenigstens einem Wärmetauscher (18), wenigstens einem Dampferzeuger (32) und wenigstens einer Umlaufpumpe (34) dadurch gekennzeichnet, dass der Wärmetauscher fest ist und dass der Dampferzeuger und die Pumpe beweglich gehalten sind.

## Claims

1. Cooling circuit for a nuclear reactor cooled by a liquid metal, comprising at least two components (18, 32, 34; 110, 118, 120) joined together by pipework (36, 40, 42; 154, 156, 158), at least one (18; 110) of the components being fixed, characterized in that at least one other component (32, 34; 118, 120) is supported capable of moving in a horizontal plane, each movable component being connected directly to a fixed component by a thinwalled pipework (36, 42) conveying the liquid metal, this pipework being provided with an expansion compensator (44), and by a rigid and leakproof outer enclosure (46) arranged around the corresponding pipework, the said enclosure being connected in a rigid and leakproof manner on the one hand to the fixed component (18) and, on the other hand, to the corresponding movable component (32, 34).

2. Circuit according to Claim 1, characterized in that the leakproof enclosure (46) defines an annular space (50) filled with inert gas around the corresponding pipework (36, 42).

3. Circuit according to Claim 2, characterized in that a lagging (52) is arranged around the pipework (36, 42), inside the corresponding leakproof enclosure (46).

4. Circuit according to any one of Claims 1 to 3, characterized in that at least two of the components are supported in a movable manner, these movable components (32, 34; 118, 120) being connected directly to each other by a flexible pipework (40, 156) conveying the liquid metal.

5. Primary cooling circuit according to any one of Claims 1 to 4, comprising a vessel (110) containing the reactor core, at least one heat exchanger (118) external to the said vessel and at least one circulation pump (120) external to the said vessel, characterized in that the vessel is fixed and in that the heat exchanger and the pump are supported in a movable manner.

6. Secondary cooling circuit according to any one of Claims 1 to 4, comprising at least one heat exchanger (18), at least one steam generator (32) and at least one circulation pump (32), characterized in that the heat exchanger is fixed and in that the steam generator and the pump are supported in a movable manner.

FIG. 1

FIG. 2

FIG. 3a

FIG. 3b

FIG. 3c